# EUROPEAN PATENT APPLICATION

(11) **EP 4 821 776 A1**
(43) Date of publication of application: **14.10.2026**
(21) Application number: 24899361.0
(22) Date of filing: 29.08.2024
(51) Int. Cl.: B60W 30/18, B60W 50/14

(54) **OVERTAKING ASSISTANCE METHOD, APPARATUS AND DEVICE, AND STORAGE MEDIUM**

(30) Priority: 08.12.2023 CN 202311694861
(71) Applicant: VOYAH Automotive Technology Co., Ltd., Wuhan, Hubei 430109 (CN)
(72) Inventor: LU, Fang, Wuhan, Hubei 430050 (CN); LI, Jixuan, Wuhan, Hubei 430050 (CN); ZHAO, Qin, Wuhan, Hubei 430050 (CN); SHEN, Kai, Wuhan, Hubei 430050 (CN); LIU, Jifeng, Wuhan, Hubei 430050 (CN); FU, Bin, Wuhan, Hubei 430050 (CN); WANG, Junjun, Wuhan, Hubei 430050 (CN); REN, Zhigang, Wuhan, Hubei 430050 (CN); ZHOU, Huoxing, Wuhan, Hubei 430050 (CN); YU, Long, Wuhan, Hubei 430050 (CN)
(74) Representative: Bandpay & Greuter
(86) International application number: PCT/CN2024/115581
(87) International publication number: WO 2025/118715

(57) **Abstract**

The present disclosure relates to the technical field of intelligent driving. Disclosed are an overtaking assistance method, apparatus and device, and a storage medium. The method include: detecting an overtaking intent of a user; acquiring operation information of a current vehicle when the user has the overtaking intent; evaluating a safety overtaking distance according to the operation information of the current vehicle; generating an overtaking comparison image according to the safety overtaking distance, where the overtaking comparison image is an image of a vehicle projection at the safety overtaking distance; and performing overtaking assistance according to the overtaking comparison image.

## Description

### CROSS-REFERENCE TO RELATED APPLICATIONS

The present application claims priority to Chinese Patent Application No. CN202311694861.X, filed on December 8, 2023, which is hereby incorporated by reference in its entirety.

### TECHNICAL FIELD

The present disclosure relates to the technical field of intelligent driving, and in particular, to an overtaking assistance method, apparatus and device, and a storage medium.

### BACKGROUND

When driving on two-way two-lane road(s) such as some county roads or township roads, a subject vehicle may be unable to pass quickly due to factors such as a vehicle type or a driving style of a preceding vehicle. For example, due to a speed limitation of the preceding vehicle such as trucks, lorries, motorcycles, or because a driver of the preceding vehicle is unwilling to drive too fast, a speed of the subject vehicle is constrained.

In such a situation, there is only a two-way two-lane road, or even a single lane road for two-way traffic. There is a risk of encountering oncoming vehicle(s) when the vehicle overtakes. General overtaking assistance functions, due to limitations such as sensor performance, occlusion by the preceding vehicle and the like, cannot determine information about vehicles in adjacent or oncoming lanes, making it difficult to plan an overtaking path. Overtaking then relies solely on the driver's experience, which carries significant safety risks.

The above content is only for assisting in understanding technical solutions of the present disclosure and does not constitute an admission that the above content is prior art.

### SUMMARY

A primary objective of the present disclosure is to provide an overtaking assistance method, apparatus and device, and a storage medium, aiming to solve a technical problem of high overtaking risk in the prior art.

To achieve the above objective, the present disclosure provides an overtaking assistance method. The method includes the following steps: detecting an overtaking intent of a user; acquiring operation information of a current vehicle when the user has the overtaking intent; evaluating a safety overtaking distance according to the operation information of the current vehicle; generating an overtaking comparison image according to the safety overtaking distance, where the overtaking comparison image is an image of a vehicle projection at the safety overtaking distance; and performing overtaking assistance according to the overtaking comparison image.

To achieve the above objective, the present disclosure further proposes an overtaking assistance apparatus, including: an acquiring module, configured to detect an overtaking intent of a user; a processing module, configured to acquire operation information of a current vehicle when the user has the overtaking intent; the processing module is further configured to evaluate a safety overtaking distance according to the operation information of the current vehicle; the processing module is further configured to generate an overtaking comparison image according to the safety overtaking distance, where the overtaking comparison image is an image of a vehicle projection at the safety overtaking distance; and a control module, configured to perform overtaking assistance according to the overtaking comparison image.

To achieve the above objective, the present disclosure further proposes an overtaking assistance device, including: a memory, a processor, and an overtaking assistance program stored on the memory and executable on the processor. The overtaking assistance program is configured to implement steps of the overtaking assistance method as described above.

To achieve the above objective, the present disclosure further proposes a storage medium. The storage medium stores an overtaking assistance program. When being executed by a processor, the overtaking assistance program implements steps of the overtaking assistance method as described above.

### BRIEF DESCRIPTION OF DRAWINGS

FIG. 1 is a schematic structural diagram of an overtaking assistance device according to some embodiments of the present disclosure.
FIG. 2 is a schematic flowchart of a first embodiment of an overtaking assistance method according to some embodiments of the present disclosure.
FIG. 3 is a schematic diagram of an application scenario of FIG. 2.
FIG. 4 is a schematic flowchart of a second embodiment of an overtaking assistance method according to some embodiments of the present disclosure.
FIG. 5 is a schematic diagram of a vehicle projection size in FIG. 4.
FIG. 6 is a structural block diagram of a first embodiment of an overtaking assistance apparatus according to some embodiments of the present disclosure.

### DESCRIPTION OF EMBODIMENTS

The implementations of objectives, functional features, and advantages of the present disclosure will be further described in conjunction with embodiments and with reference to accompanying drawings. It should be understood that specific embodiments described herein are only used to explain the present disclosure and are not intended to limit the present disclosure.

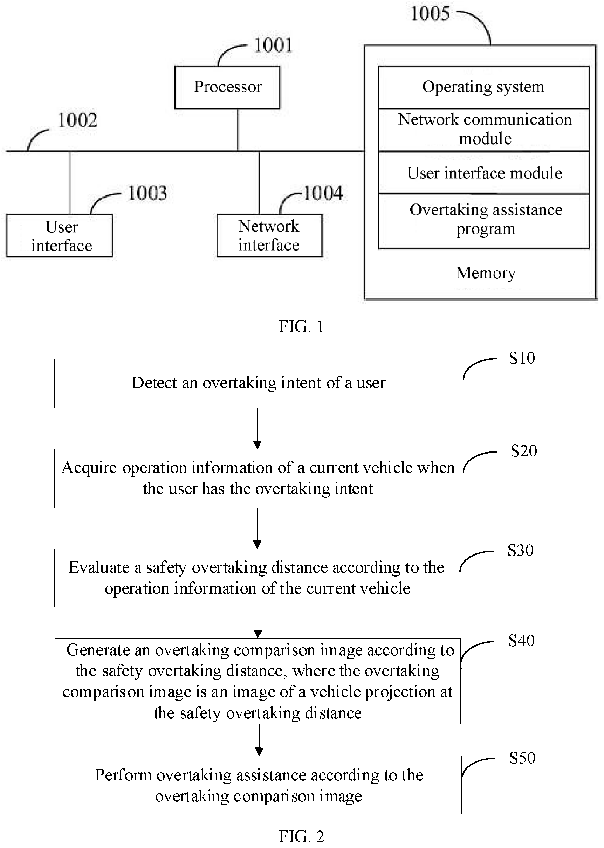

FIG. 1 is a schematic structural diagram of an overtaking assistance device according to some embodiments of the present disclosure.

As shown in FIG. 1, the overtaking assistance device may include: a processor 1001, such as a central processing unit (Central Processing Unit, CPU), a communication bus 1002, a user interface 1003, a network interface 1004, and a memory 1005. The communication bus 1002 is used to implement connection and communication between these components. The user interface 1003 may include a display (Display), an input unit such as a keyboard (Keyboard). Optionally, the user interface 1003 may further include a standard wired interface, a standard wireless interface. The network interface 1004 may optionally include a standard wired interface, a standard wireless interface (such as a wireless-fidelity (Wireless-Fidelity, Wi-Fi) interface). The memory 1005 may be a high-speed random access memory (Random Access Memory, RAM), or a stable non-volatile memory (Non-Volatile Memory, NVM), such as a disk memory. Optionally, the memory 1005 may also be a storage apparatus independent of the aforementioned processor 1001.

Those skilled in the art can understand that the structure shown in FIG. 1 does not constitute a limitation on the overtaking assistance device and may include more or fewer components than illustrated, or combine some components, or have different component arrangements.

As shown in FIG. 1, the memory 1005, as a storage medium, may include an operating system, a network communication module, a user interface module, and an overtaking assistance program.

In the overtaking assistance device shown in FIG. 1, the network interface 1004 is mainly used for data communication with a network server; the user interface 1003 is mainly used for data interaction with a user. The processor 1001 and the memory 1005 in the overtaking assistance device of the present disclosure may be set in the overtaking assistance device. The overtaking assistance device calls the overtaking assistance program stored in the memory 1005 through the processor 1001 and executes an overtaking assistance method provided by the embodiments of the present disclosure.

An embodiment of the present disclosure provides an overtaking assistance method. Referring to FIG. 2, FIG. 2 is a schematic flowchart of a first embodiment of an overtaking assistance method according to some embodiments of the present disclosure.

In the embodiment of the present disclosure, the overtaking assistance method may include the following steps S10 to S50.

In step S10, detect an overtaking intent of a user.

It should be noted that the execution subject of the embodiment of the present disclosure is an intelligent terminal. The intelligent terminal may be an in-vehicle computer, or an intelligent terminal communicating with a vehicle, or other devices with the same or similar functions as the in-vehicle computer. The embodiment of the present disclosure does not limit this, and only uses the in-vehicle computer as an example for explanation.

It should be noted that the embodiment of the present disclosure can be applied to a working condition of vehicle overtaking. When driving on two-way two-lane roads such as some county roads or township roads, a subject vehicle may be unable to pass quickly due to factors such as a vehicle type or a driving style of a preceding vehicle. For example, due to a speed limitation of the preceding vehicle such as trucks, lorries, motorcycles, or because some drivers of preceding vehicles are unwilling to drive too fast, a speed of the subject vehicle is constrained. In such a situation, there is only a two-way two-lane road, or even a single lane road for two-way traffic. When a vehicle is overtaking, there is a risk of encountering an oncoming vehicle. General overtaking assistance functions, due to limitations such as sensor performance, occlusion by the preceding vehicle and the like, cannot determine information about vehicle(s) in adjacent or oncoming lanes, making it difficult to plan an overtaking path. Overtaking then relies solely on a driver's experience, which carries significant safety risks. Based on the above, an embodiment of the present disclosure proposes a solution to solve the above problem. In some embodiments, when the speed is constrained by the preceding vehicle on a two-way two-lane road, a current vehicle can determine whether the environment of the current vehicle is a two-way two-lane road based on a map combined with a front-looking camera, and determine whether the current vehicle has an overtaking intent according to a travelling speed before the speed is constrained, a cruise set speed, a turn signal stalk, lane change behavior of the current vehicle, etc. The overtaking environment and overtaking benefits of the current road are analyzed through the map and navigation to remind the user. When the user chooses to overtake, a recommendation about a size of vehicle model is provided based on a condition such as a speed of the preceding vehicle, a road speed limit, a distance to the preceding vehicle ahead, etc., and displayed on a windshield via a HUD (Head-up Display, head-up display) for easy comparison and confirmation by the user. If the oncoming vehicle is smaller than the recommended vehicle model, the in-vehicle computer system begins to execute overtaking. During a process of executing the overtaking, if the user finds that the oncoming vehicle is larger than the recommended vehicle model, the system decides whether to abort the overtaking and return to the original lane according to a risk. By displaying, for example on the HUD or other display devices, an outline size that the oncoming vehicle should have when overtaking can be done safely, a comparative reference is provided for the user to assist the user in safely performing overtaking or assisting in overtaking control.

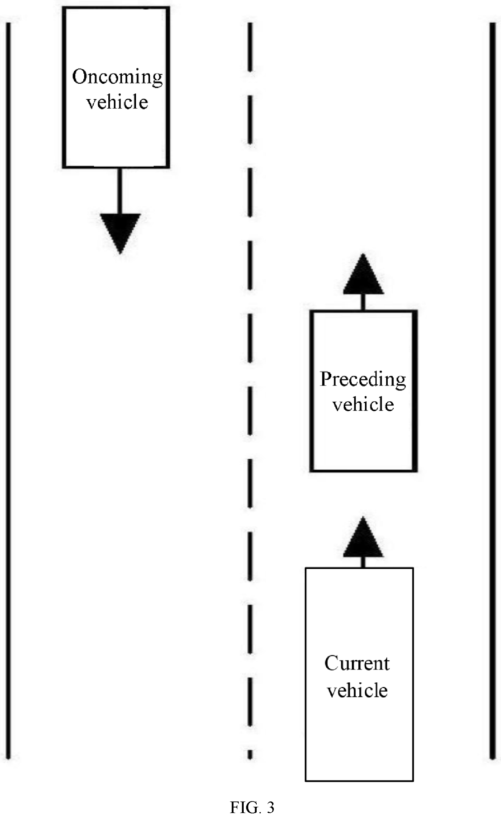

It should be noted that the embodiment of the present disclosure can be applied to a narrow lane scenario (as shown in FIG. 3), where the current vehicle driven by the user has a need to overtake the preceding vehicle but may be threatened by the oncoming vehicle, thus requiring a strategy to determine whether to overtake. In some embodiments, it can be determined whether the current vehicle is in a working condition of narrow lane and speed-constraint. This can be done by using the map to locate whether the current vehicle is on a two-way two-lane or two-way single-lane road, and determining whether the speed is constrained by the preceding vehicle. If the current vehicle is on a two-way two-lane or two-way single-lane road and the speed is constrained by the preceding vehicle, it is determined that the current vehicle is in the working condition of narrow lane and speed-constraint. In some embodiments, information such as a type, a speed, and a distance to the current vehicle of the preceding vehicle can be acquired through a camera, radar, etc., and the speed of the preceding vehicle is determined according to this information. Then, the speed of the preceding vehicle is compared with the cruise set speed. If a difference between the speed of the preceding vehicle and the cruise set speed is greater than a threshold s1, and a duration is greater than time t1, it is determined that the preceding vehicle constrains the speed; or if the user has not set a cruise speed, the speed of the preceding vehicle can be compared with the road speed limit. If a difference between the two is greater than a threshold s2 and a duration is greater than time t2, it is determined that the preceding vehicle constrains the speed. The embodiment of the present disclosure can achieve better technical effects when the current vehicle is in the working condition of narrow lane and speed-constraint. This is because, on narrow lanes, overtaking is likely to involve meeting oncoming vehicle(s), especially in a scenario such as country roads where there are many motorcycles, small trucks, tractors, etc., all moving slowly, making it difficult to choose not to overtake.

It can be understood that detecting the overtaking intent of the user can generally be done in various ways. In some embodiments, it can be determined, via a camera, whether the current vehicle has a left-side lane encroachment behavior or whether the left-turn signal stalk has been activated. If yes, it is determined that the user has an overtaking intent. In some other embodiments, the user's behavior can be observed, such as the use of a lane change signal, an adjustment of vehicle position, a change in vehicle speed, etc. If the user frequently uses the lane change signal, adjusts the vehicle position to accommodate overtaking, or accelerates to pass other vehicles, it indicates that the user has an overtaking intent. The embodiment of the present disclosure does not limit this.

In step S20, acquire operation information of a current vehicle when the user has the overtaking intent.

It can be understood that when the user has an overtaking intent, a determination needs to be made on whether the current vehicle overtakes. Therefore, various pieces of information need to be collected. The operation information of the current vehicle can be acquired in various ways, such as various sensors, image collection apparatuses, and various computing units of the vehicle.

In some embodiments, the operation information of the current vehicle may include: vehicle motion information (vehicle speed, acceleration, etc.), geographical location information, travelling information, image information collected by various image collection devices, perception information collected by the sensors, etc.

In some embodiments, forward road information, destination information, or adjacent lane information may be determined according to the operation information of the current vehicle; a risk assessment may be performed according to the forward ahead information, the destination information, or the adjacent lane information to obtain a risk assessment result; and prompt information may be generated according to the risk assessment result to issue an overtaking alarm.

It should be noted that before making an overtaking determination, it can be determined from some relatively simple operation information whether the vehicle is suitable for overtaking. If the vehicle is not suitable for overtaking, a reminder can be issued first, clearly informing the user that overtaking is not recommended, which can save subsequent computing resources. In some embodiments, a distance between the current vehicle and a destination can be calculated according to the navigation. If this distance is below a threshold s3, it is determined that the vehicle is in a low-speed driving approaching the destination. If the system determines that the user has an overtaking intent at this time, it reminds the user with "Approaching destination, please drive patiently". In some embodiments, if there is an intersection within a certain distance s4 ahead of the current vehicle, and the user has an overtaking intent, the user is reminded with "Intersection ahead, overtaking is dangerous". In some embodiments, if it is detected that there is a vehicle driving in an oncoming lane, and the user has an overtaking intent, the user is reminded with "Vehicle in oncoming lane, do not overtake". In some embodiments, remaining mileage of the current narrow road may be determined by combining the map and the navigation, the required time may be estimated based on the current vehicle speed, and the mileage and time may be informed to the user. When the user has an overtaking intent, narrow road travelling time is calculated according to a maximum road speed limit, and the saved time t3 by overtaking is compared with a threshold t4. When the time t3 is less than the threshold t4, the user is reminded with "Occupying the oncoming lane to overtake can only save t3 time, not recommended"; when the time t3 is greater than the threshold t4, the user is reminded with "Occupying the oncoming lane to overtake can only save t3 time, please drive cautiously". In some embodiments, when the user clearly expresses an overtaking intent through voice, a switch, the turn signal stalk, etc., the system assists in overtaking. The preconditions for overtaking are: determining whether there is an intersection within a certain distance s4 ahead, if yes, overtaking cannot be performed; determining whether there is a vehicle on the oncoming lane within a certain time t5, if yes, overtaking cannot be performed; whether a road curvature exceeds a threshold s5, if the curvature does not meet the requirement, overtaking cannot be performed; other risk determination for overtaking by occupying the oncoming lane (obstacles, pedestrians, etc.). The above t1~t5, s1~s5 are adjustable thresholds set according to engineer experience or calibration values, which are used to assist in explaining the embodiment of the present disclosure, and their specific values are not limited.

In step S30, evaluate a safety overtaking distance according to the operation information of the current vehicle.

It should be noted that, the safety overtaking distance is a closest distance between the current vehicle and the oncoming vehicle under the premise of safe overtaking, as shown in FIG. 3. If the distance between the oncoming vehicle and the current vehicle is greater than or equal to the safety overtaking distance, overtaking is permitted. If the distance between the oncoming vehicle and the current vehicle is less than the safety overtaking distance, there is a certain overtaking risk, and overtaking is not recommended. Although the oncoming vehicle might slow down upon seeing the current vehicle, safety is paramount, and it is not recommended for the current vehicle to change lanes to overtake.

In some embodiments, a first overtaking required distance may be determined according to the operation information of the current vehicle; an overtaking time may be determined according to the operation information of the current vehicle and the first overtaking required distance; and the safety overtaking distance may be determined according to the first overtaking required distance, the overtaking time, and the operation information of the current vehicle.

It can be understood that the first overtaking required distance is a distance the current vehicle needs to travel to complete an overtaking action. It may be estimated by a travelling distance, may be estimated by a speed of the preceding vehicle and an estimated travelling time, or may be calculated using calibration data under a test working condition, i.e., estimated through the speed of the preceding vehicle, the speed of the current vehicle, and the user's driving habits. In a specific implementation, according to the overtaking required distance and the overtaking time, it can be determined whether the current vehicle has an opportunity to reach the road speed limit during the overtaking process. In the embodiment of the present application, a comprehensive determination needs to be made according to the first overtaking required distance, the overtaking time, and the operation information of the current vehicle (mainly speed, acceleration, speed limit value, etc.) to determine the safety overtaking distance. In some embodiments, it is possible to use information such as from the sensors to determine the first overtaking required distance l5, and then calculate t6=2×l5/a1 according to l5 and a1, where a1 is a vehicle acceleration generally used by the user.

In some embodiments, a travelling distance of the preceding vehicle, a distance between the current vehicle and the preceding vehicle, a length of the preceding vehicle, and a distance to be maintained after overtaking are determined according to the operation information of the current vehicle; and the first overtaking required distance is determined according to the travelling distance of the preceding vehicle, the distance between the current vehicle and the preceding vehicle, the length of the preceding vehicle, and the distance to be maintained after overtaking.

It should be noted that to accurately calculate the first overtaking required distance, multiple factors need to be considered, for example: a distance between the current vehicle and the preceding vehicle (l1) which may be obtained via sensors; a length of the preceding vehicle (l2) estimated through a type of the preceding vehicle (truck, lorry, car, two-wheeler); a distance to be maintained with the preceding vehicle after returning to the original lane (l3); a travelling distance of the preceding vehicle (l0) during the overtaking process; and an additional straight-line distance l4 caused by two lane changes. l5=l1+l2+l3+l4+l0 is taken as the first overtaking required distance needed for overtaking, in which, l0 is the travelling distance of the preceding vehicle, l1 is the distance between the current vehicle and the preceding vehicle, l2 is the length of the preceding vehicle, l3 is the distance to be maintained after overtaking, and l4 is the additional straight-line distance caused by two lane changes. It should be noted that although l4 accounts for a small proportion, it is recommended to be included to improve the accuracy of calculation for the first overtaking required distance.

In some embodiments, a speed limit value of a current road may be acquired; a current vehicle speed and an overtaking acceleration may be determined according to the operation information of the current vehicle; a second overtaking required distance may be determined according to the speed limit value, the current vehicle speed, and the overtaking acceleration; and the overtaking time may be determined according to the first overtaking required distance and the second overtaking required distance.

The embodiment of the present disclosure proposes the following preferred manner for calculating the safety overtaking distance, in combination with the overtaking time: Acquire the distance between the current vehicle and the preceding vehicle (l1) via sensors, estimate the length of the preceding vehicle (l2) through the type of the preceding vehicle (truck, lorry, car, two-wheeler), acquire the distance to be maintained with the preceding vehicle after returning to the original lane (l3), the travelling distance of the preceding vehicle (l0) during the overtaking process, and the additional straight-line distance l4 caused by two lane changes. l5= l1+l2+l3+l4+l0 is taken as the required travelling distance for overtaking. In this working condition, the general overtaking acceleration is a1, the current vehicle speed is v1, and the road speed limit increased by 10% is taken as a maximum driving speed v2, l6=(v2-v1)²/(2×a1). l6 is compared with l5: when l6≥l5, t6=(2×l5/a1) ×1/2; when l6<l5, t6=(l5+l6)/(v2-v1); l7=l5+(v1+v2)×t6. (Assuming the travelling speed of the oncoming vehicle is v2). Here, t6 is the overtaking time, l7 is the safety overtaking distance, l5 is the first overtaking required distance, and l6 is the second overtaking required distance. If the overtaking distance is long, the vehicle's speed curve is acceleration first then constant speed; if the overtaking distance is short, the vehicle is in a state of acceleration all the time. Therefore, two types of overtaking required distances, l5 and l6, are set to determine which type the motion state is during the overtaking process according to the second overtaking required distance, thereby calculating the safety overtaking distance more accurately.

In step S40, generate an overtaking comparison image according to the safety overtaking distance, where the overtaking comparison image is an image of a vehicle projection at the safety overtaking distance.

It should be noted that the overtaking comparison image is an image used as a reference for the user to determine whether the oncoming vehicle meets the safety overtaking distance. The user can compare the overtaking comparison image on the display device with the oncoming vehicle to determine whether an overtaking condition is met.

It can be understood that the overtaking comparison image is an image of the oncoming vehicle projected from the safety overtaking distance onto the display device, which may include projection size information, or may not include projection size information.

In some embodiments, the overtaking comparison image is an image of a vehicle projection size at the safety overtaking distance, i.e., the overtaking comparison image, viewed from the user's position, should appear the same size as the actual vehicle at the safety overtaking distance.

It can be understood that the overtaking comparison image may include projection size information. In this case, the overtaking comparison image is an image of the vehicle projection size of the oncoming vehicle projected from the safety overtaking distance onto the display device.

In step S50, perform overtaking assistance according to the overtaking comparison image.

It should be noted that performing overtaking assistance according to the overtaking comparison image can be implemented in various ways. It can be directly displayed on a screen for the user to compare, or displayed on the HUD of the windshield. By locking the vehicle position and the user's eye position, the overtaking comparison image is displayed between or near these two positions to help the user compare. HUD is a technology that directly displays important information within the user's vision by projecting onto a transparent display within the user's vision, allowing the user to acquire key information without shifting their gaze from the forward road. HUD can display a vehicle speed, a navigation instruction, warning information, other driving-related data, etc. This technology aims to improve user concentration and reaction time to enhance driving safety. HUD is widely used in fields such as automobiles, aircraft, and military applications. In the embodiment of the present disclosure, the HUD can be projected onto the windshield.

In the embodiment of the present disclosure, the overtaking intent of the user is detected; when the user has the overtaking intent, the operation information of the current vehicle is acquired; the safety overtaking distance is evaluated according to the operation information of the current vehicle; the overtaking comparison image is generated according to the safety overtaking distance, where the overtaking comparison image is the image of the vehicle projection size at the safety overtaking distance; and overtaking assistance is performed according to the overtaking comparison image. Through the above manner, a method for overtaking assessment in a situation where oncoming vehicle detection is not possible is achieved. By providing the overtaking comparison image for user reference, even less experienced drivers can obtain relatively reliable guidance, improving overtaking safety.

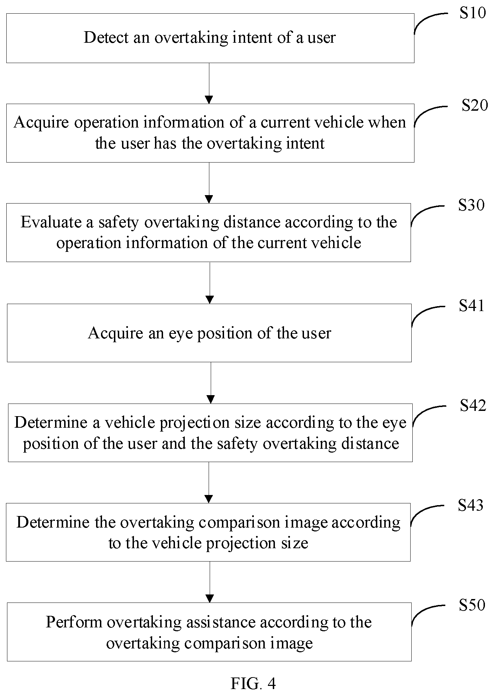

FIG. 4 is a schematic flowchart of a second embodiment of an overtaking assistance method according to some embodiments of the present disclosure.

Based on the first embodiment above, step S40 of the overtaking assistance method in the embodiment of the present disclosure may include steps S41 and S42.

In step S41, acquire an eye position of the user.

It should be noted that acquiring the eye position of the user is mainly used to determine a distance from the user's eyes to the windshield, or a distance from the user's eyes to a display position of the overtaking comparison image. The eye position of the user can be obtained through cabin monitoring or a driver's seat image collection apparatus. The user here can be the driver.

In step S42, determine a vehicle projection size according to the eye position of the user and the safety overtaking distance.

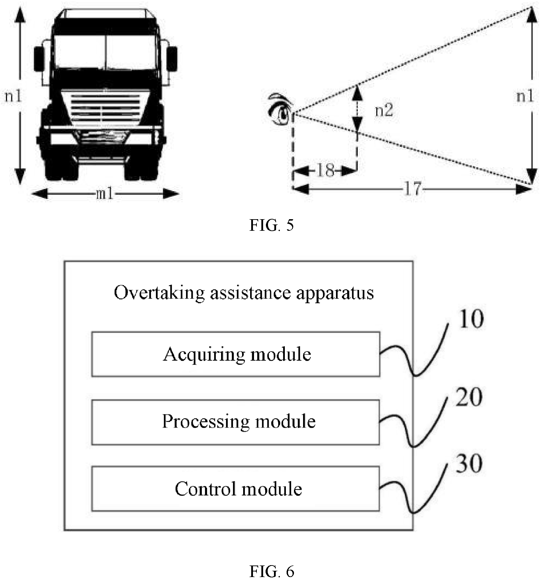

In some embodiments, the eye position of the user may be acquired according to sensors (cameras, radar, etc.) inside the cabin, and meanwhile, a distance l8 from the user's eye position to the HUD display position may be calculated according to this position. According to the principle of similarity, a projection size of a general vehicle's front contour is calculated, as shown in FIG. 5, where l8 is the distance from the user's eye position to the HUD display position, l7 is the safety overtaking distance, n1 is the vehicle size, and n2 is the vehicle projection size.

In some embodiments, a mapping table of vehicle type-size relationship may be acquired. The mapping table of vehicle type-size relationship includes vehicle types of truck, van, car, and motorcycle, and vehicle sizes corresponding to the vehicle types. According to the eye position of the user, the safety overtaking distance, and the vehicle size of each vehicle type in the mapping table of vehicle type-size relationship, vehicle projection sizes corresponding to each vehicle type are generated.

It can be understood that if the vehicle type of the oncoming vehicle is different, the actual estimated vehicle size should also be different. Therefore, the vehicle size can be determined according to the vehicle type. If the vehicle type cannot be identified due to being too far away or being blocked by the preceding vehicle, several typical vehicle types can all be displayed for user reference, such as vehicle types of truck, van, car, and motorcycle, along with corresponding vehicle sizes. As shown in FIG. 5, a size of a lorry is calculated as (m1, n1). According to the principle of similarity, the vehicle projection size can be derived: n2 = n1 × l8 / l7, m2 = m1 × l8 / l7. Similarly, the vehicle projection sizes for trucks, vans, cars, motorcycles, etc., can all be calculated and projected together on the HUD.

In step S43, determine the overtaking comparison image according to the vehicle projection size.

It should be noted that after determining the vehicle projection size, the overtaking comparison image can be drawn according to the vehicle projection size. The overtaking comparison image can be a realistic image of the vehicle's front end or a size box for easy comparison. This embodiment uses the size box as an example for subsequent explanation.

The embodiment of the present disclosure proposes the following preferred improvement solution. The user observes the oncoming vehicle, and compares a size of the oncoming vehicle with a size box of the same vehicle type. If it is smaller than the size box, it indicates there is no vehicle within the required travelling distance, and the system assists in changing lanes. If it is larger than the size box, it indicates there is a vehicle within the required travelling distance, and the system does not change lanes. After the user confirms that the size of the oncoming vehicle is smaller than the size box, the system performs an overtaking action occupying the oncoming lane according to a designed path. Calculation and determination during the overtaking process: As time progresses during the overtaking, the overtaking time t6 gradually decreases, and the corresponding calculated size box gradually becomes larger. During the lane change process, when the user determines that the size of the oncoming vehicle is larger than the size box, the system calculates according to the lane change progress: Adjust the vehicle acceleration a1 generally used by the user to a maximum acceleration allowed by the system and adjust the distance l3 to be maintained with the preceding vehicle after the current vehicle returns to the original lane to a minimum distance allowed by the system, and obtain lane change time t_{before}. After adjusting a1 to a deceleration, time t_{after} to return to the original following relative position is calculated. The time t_{before} is compared with the time t_{after}, and the smaller time is chosen to either continue overtaking or retreat to the original relative following position. Simultaneously, if a sensor detects the oncoming vehicle, the maximum driving speed v2 is adjusted to the actual speed of the oncoming vehicle for risk determination. When there is a risk, the time t_{before} or the time t_{after} is compared with collision time (calculated according to the actual speed of the oncoming vehicle, the distance between the oncoming vehicle and the current vehicle, and the speed of the current vehicle). If the time t_{before} is less than the collision time, accelerate to change lanes; if the time t_{after} is less than the collision time, decelerate to retreat. If both the time t_{before} and the time t_{after} are greater than the collision time, retreat while reminding the user to take over. During the lane change process, if it is found that there is a vehicle ahead of the preceding vehicle, assessment is performed according to a distance l9 between the preceding vehicle and the vehicle ahead of the preceding vehicle. If l9 is less than a threshold s6, the length of the preceding vehicle (l2) is adjusted to the distance from the rear of the preceding vehicle to the front of the vehicle ahead of the preceding vehicle; if l9 is not less than threshold s6, the overtaking behavior is not affected.

In the embodiment of the present disclosure, the eye position of the user is acquired; the vehicle projection size is determined according to the eye position of the user and the safety overtaking distance; and the overtaking comparison image is determined according to the vehicle projection size. Through the above manner, the process of determining vehicle projection size according to the eye position of the user is realized, further improving the visual effect of the overtaking comparison image, making it easier for the user to compare, and enhancing vehicle safety.

Furthermore, the embodiment of the present disclosure also proposes a storage medium. The storage medium is stored with an overtaking assistance program. When being executed by a processor, the overtaking assistance program implements the steps of the overtaking assistance method as described above.

FIG. 6 is a structural block diagram of a first embodiment of an overtaking assistance apparatus according to some embodiments of the present disclosure.

As shown in FIG. 6, the overtaking assistance apparatus proposed in the embodiment of the present disclosure may include: an acquiring module 10, configured to detect an overtaking intent of a user; the acquiring module 10 being also configured to acquire operation information of a current vehicle when the user has the overtaking intent; a processing module 20, configured to evaluate a safety overtaking distance according to the operation information of the current vehicle; the processing module 20 being also configured to generate an overtaking comparison image according to the safety overtaking distance, where the overtaking comparison image is an image of a projection at the safety overtaking distance; and a control module 30, configured to perform overtaking assistance according to the overtaking comparison image.

It should be understood that the above is only for illustrative purposes and does not constitute any limitation on the technical solution of the present disclosure. In specific applications, those skilled in the art can set according to needs, which is not limited by the present disclosure.

In the embodiment of the present disclosure, the acquiring module 10 detects the overtaking intent of the user; the acquiring module 10 acquires the operation information of the current vehicle when the user has the overtaking intent; the processing module 20 evaluates the safety overtaking distance according to the operation information of the current vehicle; the processing module 20 generates the overtaking comparison image according to the safety overtaking distance, where the overtaking comparison image is an image of a vehicle projection size at the safety overtaking distance; and the control module 30 performs the overtaking assistance according to the overtaking comparison image. Through the above manner, a method for overtaking assessment in a situation where oncoming vehicle detection is not possible is achieved. By providing an overtaking comparison image for user reference, even less experienced drivers can obtain relatively reliable guidance, improving overtaking safety.

In some embodiments, the processing module 20 may also be configured to generate an overtaking comparison image according to the safety overtaking distance, where the overtaking comparison image is an image of a vehicle projection size at the safety overtaking distance.

In some embodiments, the processing module 20 may also be configured to acquire an eye position of the user; determine a vehicle projection size according to the eye position of the user and the safety overtaking distance; and determine the overtaking comparison image according to the vehicle projection size.

In some embodiments, the processing module 20 may also be configured to acquire a mapping table of vehicle type-size relationship, where the mapping table of vehicle type-size relationship includes vehicle types of truck, van, car, and motorcycle, and vehicle sizes corresponding to the vehicle types; and according to the eye position of the user, the safety overtaking distance, and a vehicle size of each vehicle type in the mapping table of vehicle type-size relationship, generate a vehicle projection size corresponding to each vehicle type.

In some embodiments, the processing module 20 may also be configured to determine a first overtaking required distance according to the operation information of the current vehicle; determine an overtaking time according to the operation information of the current vehicle and the first overtaking required distance; and determine a safety overtaking distance according to the first overtaking required distance, the overtaking time, and the operation information of the current vehicle.

In some embodiments, the processing module 20 may also be configured to determine a travelling distance of the preceding vehicle, a distance between the current vehicle and the preceding vehicle, a length of the preceding vehicle, and a distance to be maintained after overtaking according to the operation information of the current vehicle; and determine the first overtaking required distance according to the travelling distance of the preceding vehicle, the distance between the current vehicle and the preceding vehicle, the length of the preceding vehicle, and the distance to be maintained after overtaking.

In some embodiments, the processing module 20 may also be configured to acquire a speed limit value of a current road; determine a current vehicle speed and an overtaking acceleration according to the operation information of the current vehicle; determine a second overtaking required distance according to the speed limit value, the current vehicle speed, and the overtaking acceleration; and determine the overtaking time according to the first overtaking required distance and the second overtaking required distance.

In some embodiments, the processing module 20 may also be configured to determine forward road information, destination information, or adjacent lane information according to the operation information of the current vehicle; perform a risk assessment according to the forward road information, the destination information, or the adjacent lane information to obtain a risk assessment result; and generate prompt information according to the risk assessment result to issue an overtaking alarm.

The present disclosure detects the overtaking intent of the user; when the user has the overtaking intent, acquires the operation information of the current vehicle; evaluates the safety overtaking distance according to the operation information of the current vehicle; generates the overtaking comparison image according to the safety overtaking distance, where the overtaking comparison image is an image of a vehicle projection at the safety overtaking distance; and performs the overtaking assistance according to the overtaking comparison image. Through the above manner, a method for overtaking assessment in a situation where oncoming vehicle detection is not possible is achieved. By providing an overtaking comparison image for user reference, even less experienced drivers can obtain relatively reliable guidance, improving overtaking safety.

It should be noted that, a workflow described above is only schematic and does not constitute a limitation on the protection scope of the present disclosure. In practical applications, those skilled in the art can choose part or all of it to achieve the objectives of the solution of the embodiments according to actual needs, which is not limited here.

In addition, for technical details not exhaustively described in this embodiment, reference can be made to the overtaking assistance method provided by any embodiment of the present disclosure, which will not be repeated here.

Furthermore, it should be noted that in this document, terms "comprise", "include" or any other variation thereof are intended to cover non-exclusive inclusion, such that a process, a method, an article, or a system that includes a series of elements includes not only those elements but also other elements not explicitly listed, or elements inherent to such process, method, article, or system. Without further limitation, an element defined by the phrase "comprising a ..." does not exclude the existence of additional identical elements in the process, the method, the article, or the system that includes this element.

The serial numbers of the above embodiments of the present disclosure are for description only and do not represent superiority or inferiority of the embodiments.

Through the description of the above embodiments, those skilled in the art can clearly understand that the methods of the above embodiments can be implemented by means of software plus a necessary general hardware platform, and of course, also by hardware. However, in many cases, the former is a better implementation. Based on this understanding, the essence of the technical solution of the present disclosure or the part contributing to the prior art can be embodied in a form of a software product. The computer software product is stored in a storage medium (such as a read only memory (Read Only Memory, ROM)/RAM, a magnetic disk, an optical disk), including several instructions to enable a terminal device (which can be a mobile phone, a computer, a server, or a network device, etc.) to execute the methods described in various embodiments of the present disclosure.

The above are only preferred embodiments of the present disclosure and do not limit the patent scope of the present disclosure. Any equivalent structure or equivalent process transformation made using the content of the specification and the drawings of the present disclosure, or direct or indirect application in other related technical fields, is similarly included within the patent protection scope of the present disclosure.

## Claims

1. An overtaking assistance method, comprising:
detecting an overtaking intent of a user;
acquiring operation information of a current vehicle when the user has the overtaking intent;
evaluating a safety overtaking distance according to the operation information of the current vehicle;
generating an overtaking comparison image according to the safety overtaking distance, wherein the overtaking comparison image is an image of a vehicle projection at the safety overtaking distance; and
performing overtaking assistance according to the overtaking comparison image.

2. The method according to claim 1, wherein the generating an overtaking comparison image according to the safety overtaking distance, wherein the overtaking comparison image is an image of a vehicle projection at the safety overtaking distance, comprises:
generating an overtaking comparison image according to the safety overtaking distance, wherein the overtaking comparison image is an image of a vehicle projection size at the safety overtaking distance.

3. The method according to claim 1 or 2, wherein the generating an overtaking comparison image according to the safety overtaking distance comprises:
acquiring an eye position of the user;
determining a vehicle projection size according to the eye position of the user and the safety overtaking distance; and
determining the overtaking comparison image according to the vehicle projection size.

4. The method according to claim 3, wherein the determining a vehicle projection size according to the eye position of the user and the safety overtaking distance comprises:
acquiring a mapping table of vehicle type-size relationship, wherein the mapping table of vehicle type-size relationship includes vehicle types of truck, van, car, and motorcycle, and vehicle sizes corresponding to the vehicle types;
generating a vehicle projection size corresponding to each vehicle type according to the eye position of the user, the safety overtaking distance, and a vehicle size of each vehicle type in the mapping table of vehicle type-size relationship.

5. The method according to claim 1 or 2, wherein the evaluating a safety overtaking distance according to the operation information of the current vehicle comprises:
determining a first overtaking required distance according to the operation information of the current vehicle;
determining an overtaking time according to the operation information of the current vehicle and the first overtaking required distance; and
determining the safety overtaking distance according to the first overtaking required distance, the overtaking time, and the operation information of the current vehicle.

6. The method according to claim 5, wherein the determining a first overtaking required distance according to the operation information of the current vehicle comprises:
determining a travelling distance of a preceding vehicle, a distance between the current vehicle and the preceding vehicle, a length of the preceding vehicle, and a distance to be maintained after overtaking according to the operation information of the current vehicle; and
determining the first overtaking required distance according to the travelling distance of the preceding vehicle, the distance between the current vehicle and the preceding vehicle, the length of the preceding vehicle, and the distance to be maintained after overtaking.

7. The method according to claim 5, wherein the determining an overtaking time according to the operation information of the current vehicle and the first overtaking required distance comprises:
acquiring a speed limit value of a current road;
determining a current vehicle speed and an overtaking acceleration according to the operation information of the current vehicle;
determining a second overtaking required distance according to the speed limit value, the current vehicle speed, and the overtaking acceleration; and
determining the overtaking time according to the first overtaking required distance and the second overtaking required distance.

8. The method according to claim 1 or 2, after the acquiring operation information of a current vehicle when the user has the overtaking intent, further comprising:
determining forward road information, destination information, or adjacent lane information according to the operation information of the current vehicle;
performing a risk assessment according to the forward road information, the destination information, or the adjacent lane information to obtain a risk assessment result; and
generating prompt information according to the risk assessment result to issue an overtaking alarm.

9. An overtaking assistance apparatus, comprising:
an acquiring module configured to detect an overtaking intent of a user;
the acquiring module being further configured to acquire operation information of a current vehicle when the user has the overtaking intent;
a processing module, configured to evaluate a safety overtaking distance according to the operation information of the current vehicle;
the processing module being further configured to generate an overtaking comparison image according to the safety overtaking distance, wherein the overtaking comparison image is an image of a vehicle projection at the safety overtaking distance; and
a control module, configured to perform overtaking assistance according to the overtaking comparison image.

10. The overtaking assistance apparatus according to claim 9, wherein the processing module is further configured to generate the overtaking comparison image according to the safety overtaking distance, wherein the overtaking comparison image is an image of a vehicle projection size at the safety overtaking distance.

11. An overtaking assistance device, comprising: a memory, a processor, and an overtaking assistance program stored on the memory and executable on the processor, wherein the overtaking assistance program is configured to implement steps of the overtaking assistance method according to any one of claims 1 to 8.

12. A storage medium, wherein the storage medium is stored with an overtaking assistance program, which when executed by a processor, implements steps of the overtaking assistance method according to any one of claims 1 to 8.
